**Europäisches Patentamt**

**European Patent Office**

**Office européen des brevets**

(19)

(11) Veröffentlichungsnummer : **0 102 942**
**B1**

(12) # EUROPÄISCHE PATENTSCHRIFT

(45) Veröffentlichungstag der Patentschrift :
**19.08.87**

(21) Anmeldenummer : **83890147.8**

(22) Anmeldetag : **06.09.83**

(51) Int. Cl.⁴ : **B 62 K   3/02**, B 62 K 11/02

(54) **Zweiradfahrzeug.**

(30) Priorität : **08.09.82 AT 3351/82**

(43) Veröffentlichungstag der Anmeldung :
**14.03.84 Patentblatt 84/11**

(45) Bekanntmachung des Hinweises auf die Patenterteilung : **19.08.87 Patentblatt 87/34**

(84) Benannte Vertragsstaaten :
**BE CH DE FR GB IT LI LU NL SE**

(56) Entgegenhaltungen :
**DE-A- 1 961 989**
**DE-B- 1 034 999**
**DE-C-   907 260**
**FR-A- 1 147 096**
**US-A- 4 139 072**

(73) Patentinhaber : **Steyr-Daimler-Puch Aktiengesell-**
**schaft**
**Kärntnerring 7**
**A-1010·Wien (AT)**

(72) Erfinder : **Spekner, Friedrich**
**Liebenauer-Hauptstrasse 283 a**
**A-8041 Graz (AT)**

EP 0 102 942 B1

## Beschreibung

Die Erfindung bezieht sich auf ein Zweiradfahrzeug nach dem Oberbegriff des Hauptanspruchs.

Bei einem bekannten Zweiradfahrzeug, nämlich einem Fahrrad (DE-C-1 961 989) sind die beiden Rahmenträger zu einem etwa V- oder U-förmig gebogenen Rohr vereint. An diesem Rohr sind im Scheitelbereich zwei quer zur Rohrachse gerichtete Buchsen angeschweißt, die Schrauben zur Befestigung eines Gehäuses aufnehmen, das aus Blech besteht und in zwei die Hinterradgabel bildende Arme ausläuft. Diese Fahrradausbildung soll die Zerlegbarkeit ermöglichen, ist aber nicht dazu geeignet, Zweiradfahrzeuge verschiedenen Typs mit dem gleichen Rahmen herzustellen. Es ist auch schon ein gegossener V-förmiger Fahrradrahmen aus Leichtmetall bekannt (DE-C-907 260 (der den Oberbegriff des Hauptanspruchs entspricht) bzw. DE-C-1 034 999), der im Scheitelbereich der beiden Rahmenträger einen über seine Breite hinausragenden Befestigungsflansch besitzt, an dessen unterseitiger Paßfläche ein Motorgetriebeblock anliegt, der mittels von oben in den Befestigungsflansch eingeführter Schrauben an diesem befestigt ist. Die beträchtliche Vergrößerung der Rahmenbreite durch den Befestigungsflansch ist bei einem Fahrrad äußerst ungünstig, zumal jede Verbreiterung des Rahmens auch mit einer Gewichtsvermehrung verbunden ist. Der bekannte Rahmen bietet nicht die Möglichkeit, ihn unverändert für ein Fahrrad mit starrer Hinterradgabel oder ein Fahrrad mit abgefederter Hinterradschwinge zu verwenden.

Der Erfindung liegt daher die Aufgabe zugrunde, das eingangs geschilderte Zweiradfahrzeug so zu verbessern, daß unter Beibehaltung des Rahmens und ohne dessen Abänderung wahlweise ein Fahrrad mit starrer Hinterradgabel oder ein Fahrrad mit abgefederter Hinterradschwinge hergestellt werden kann.

Die Aufgabe wird erfindungsgemäß mit den Merkmale des Hauptanspruchs gelöst.

Wird die mit der Hinterradgabel starre Baueinheit, die auch das Lager für die Tretkurbel umfaßt, unmittelbar an der Paßfläche befestigt, so ergibt sich ein übliches Fahrrad mit ungefedertem Hinterrad und ohne seitlich vom Rahmen abstehende Befestigungsteile, wobei die Hinterradgabel auch durch Schrägstreben am Rahmen abgestützt sein kann. Zur Aufnahme der oberen Strebenenden genügen Sacköffnungen im Rahmen, so daß keine weiteren Maßnahmen getroffen zu werden brauchen und die Montage der Baueinheit keinerlei Schwierigkeiten bereitet. Soll ein Zweiradfahrzeug mit Hinterradschwinge hergestellt werden, so ist es lediglich notwendig, an der Paßfläche die Grundplatte anzubringen, die dann nicht nur das Schwenklager für die mit der Hinterradgabel vereinigte Baueinheit bildet, sondern zugleich auch das Widerlager für die zwischen der Baueinheit und der Grundplatte eingesetzte Stützfeder aufweist, so daß sich die gewünschte gefederte Hinterradschwinge ergibt, ohne am Rahmen Veränderungen vornehmen oder Federwiderlager vorsehen zu müssen. Als Stützfeder kann eine Gummifeder, aber auch ein Tellerfederpaket angeordnet werden, welch letzteres den Vorteil hat, daß sich durch Veränderung der Anzahl der Einzeltellerfedern die Federstärke beeinflussen läßt. Je nachdem, ob die Baueinheit zu einem geschlossenen Kettenkasten ergänzt wird oder nicht, kann entweder ein besonders leichtes Sportfahrzeug oder ein komfortables Tourenfahrzeug erreicht werden.

Um eine Verschmutzung des Schwenklagers für die Baueinheit sowie der Stützfeder zu verhindern und das Erscheinungsbild zu verbessern, ist bei Anordnung der Grundplatte der Raum zwischen dem Gehäuse der Baueinheit und der Paßfläche durch einen Faltenbalg abgedeckt.

In der Zeichnung ist der Erfindungsgegenstand beispielsweise dargestellt, und zwar zeigen

Figur 1 den Rahmen eines Fahrrades mit starrer Hinterradgabel in Seitenansicht,

Figur 2 den gleichen Rahmen bei Verwendung mit einer Hinterradschwinge in Ansicht von der anderen Seite,

Figur 3 die Befestigung einer starren Hinterradgabel am Fahrzeugrahmen im größeren Maßstab im Vertikalschnitt nach der Linie III-III der Fig. 5,

Figur 4 einen zugehörigen Querschnitt im Bereich der Tretlagerachse,

Figur 5 einen Schnitt entlang der Paßfläche nach der Linie V-V der Fig. 4 und

Figur 6 die Anordnung einer Hinterradschwinge in einer etwa der Fig. 3 entsprechenden Darstellungsweise.

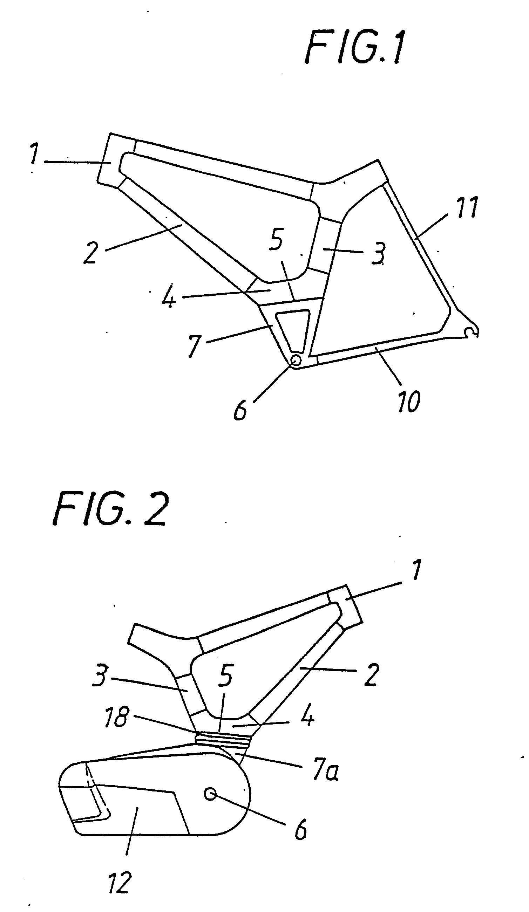

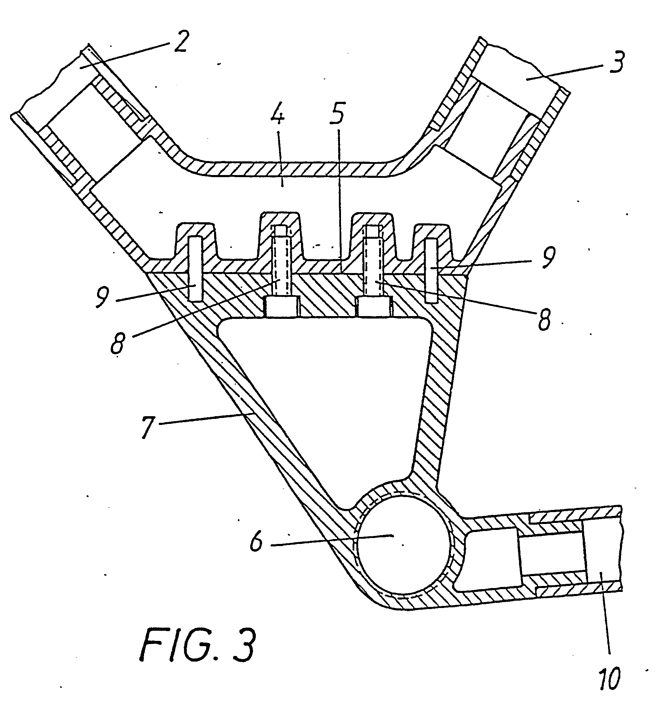

Das erfindungsgemäße Zweiradfahrzeug weist einen Rahmen auf, der einen von einem Lenkkopf 1 schräg abwärts führenden Rahmenträger 2 und einen an diesen unten anschliessenden aufwärts gerichteten, eine nicht dargestellte Sattelstütze aufnehmenden Rahmenträger 3 umfaßt. Im Scheitelbereich der beiden Rahmenträger 2, 3, also im Bereich des Abschnittes 4, besitzt der Rahmen eine unterseitige Paßfläche 4. Gemäß den Fig. 1 und 3 bis 5 ist unmittelbar an der Paßfläche 5 ein ein Lager 6 für eine Tretkurbel umfassendes Gehäuse 7 mit Hilfe von Schrauben 8 und Paßstiften 9 befestigt. Dieses Gehäuse 7 bildet mit einer Hinterradgabel 10 eine starre Baueinheit, wobei die Hinterradgabel 10 durch Schrägstreben 11 oben am Fahrzeugrahmen abgestützt ist. Die Streben 11 sind einfach in Sacköffnungen des Rahmens eingesteckt.

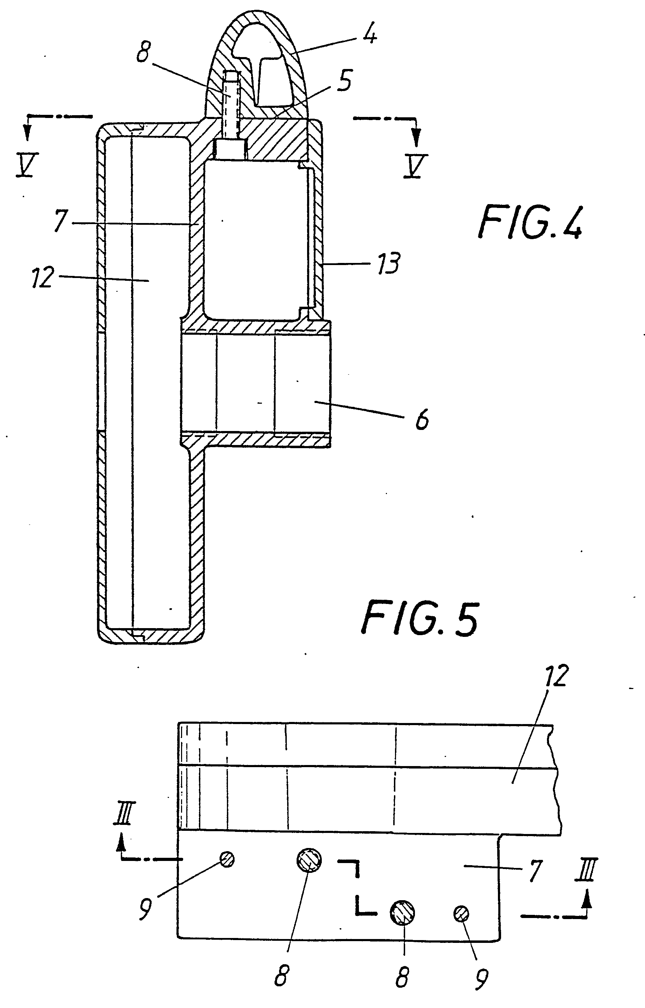

Gemäß Fig. 4 und 5 bildet das Gehäuse 7 den tragenden Teil eines geschlossenen Kettenkastens 12, wobei der Raum zwischen dem Lager 6 der Tretkurbel und der an die Paßfläche anschließenden Gehäusewand durch einen Seitendeckel 13 abgeschlossen sind.

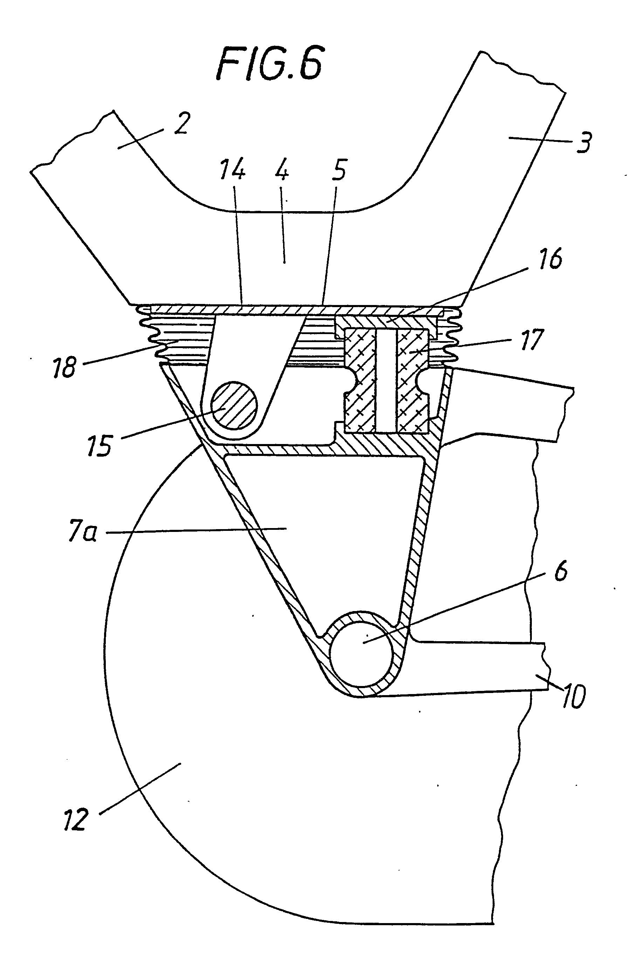

Die Fig. 2 und 6 zeigen eine Variante, bei der die Paßfläche 5 eine Grundplatte 14 trägt, die mit einem Schwenklager 15 für das Gehäuse 7a und einem Widerlager für eine Gummistützfeder 17 versehen ist. Das Gehäuse 7a bildet ebenfalls den tragenden Teil des geschlossenen Kettenkastens 12. Der Raum zwischen dem Gehäuse 7a und der Paßfläche 5 ist durch einen Faltenbalg 18 abgedeckt.

Die aus dem Gehäuse 7a und dem Kettenkasten 12 bestehende Hinterradschwinge könnte auch als Motor-Getriebegehäuse ausgebildet sein, so daß sich ein Motorfahrrad ergibt.

### Patentansprüche

1. Zweiradfahrzeug mit einem Rahmen, der einen vom Lenkkopf (1) schräg abwärts führenden Rahmenträger (2) und einen an diesen unten anschließenden, aufwärts gerichteten, die Sattelstütze aufnehmenden Rahmenträger (3) aufweist, wobei der Rahmen im Scheitelbereich der beiden Rahmenträger (2, 3) eine unterseitige Paßfläche (5) besitzt an die eine das Lager (6) einer Tretkurbel und die Hinterradgabel (10) umfassende Baueinheit (6,7,7a,10) anschließbar ist, dadurch gekennzeichnet, daß die Baueinheit (6,7,7a,10) ein mit der Hinterradgabel (10) starr verbundenes Gehäuse (7, 7a) aufweisent und wahlweise entweder unmittelbar oder zur Erzielung einer gefederten Hinterradschwinge unter Zwischenlage einer mit einem Schwenklager (15) für die Baueinheit (6, 7a, 10) sowie einem Widerlager (16) für eine Stützfeder (17) versehenen Grundplatte (14) am Rahmen (2, 3, 4) befestigbar ist, wobei die Baueinheit (6, 7, 7a, 10) gegebenenfalls den tragenden Teil eines geschlossenen Kettenkastens (12) bildet.

2. Zweiradfahrzeug nach Anspruch 1, dadurch gekennzeichnet, daß bei Anordnung der Grundplatte (14) der Raum zwischen einem Gehäuse (7a) der Baueinheit und der Paßfläche (5) durch einen Faltenbalg (18) abgedeckt ist.

### Claims

1. A two-wheeled vehicle with a frame, which has a frame post (2) leading diagonally downwards from the steering head, and a frame post (3) connected thereto which is directed upwards and receives the saddle support, the apex region of the two frames posts (2, 3) having on the underside a fitting area (5) to which a unit (6, 7, 7a, 10) comprising the bearing (6) of a pedal and the rear wheel fork (10) is connectable, characterised in that the unit (6, 7, 7a, 10) has a housing (7, 7a) rigidly connected to the rear wheel fork (10) and is selectively securable either directly to the frame (2, 3, 4) or to obtain a sprung rear wheel rocker arm by interposition of a base plate (14) provided with a pivot (15) for the unit (6, 7a, 10) and an abutment (16) for a support spring (17), the unit (6, 7, 7a, 10) optionally forming the bearing portion of a closed chain case (12).

2. A two-wheeled vehicle according to claim 1, characterised in that in the case of the embodiment with the base plate (14) the space between a housing (7a) of the unit and the fitting area (5) is covered by bellows (18).

### Revendications

1. Véhicule à deux roues avec un cadre qui présente à partir d'une tête de direction (1) un élément de cadre (2) qui descend obliquement et un élément de cadre (3) se raccordant en bas à ce dernier et dirigé vers le haut pour recevoir le tube porte-selle, le cadre possédant dans la région du sommet des deux éléments de cadre (2, 3), une face inférieure de montage (5) à laquelle peut se raccorder une unité constitutive (6,7,7a,10) comprenant le palier (6) d'un pédalier et la fourche arrière (10), caractérisé en ce que l'unité constitutive (6,7,7a,10) présente un corps (7,7a) réuni rigidement à la fourche arrière (10) et peut être fixé au cadre (2,3,4) sélectivement soit directement soit pour l'obtention d'une suspension oscillante élastiquement de la roue arrière avec interposition d'un plateau de base (14) prévu avec un palier d'oscillation (15) pour l'unité constitutive (6,7,7a,10), et avec une butée d'appui (16) pour un ressort de maintien (17), l'unité constitutive (6,7,7a,10) constituant éventuellement la pièce porteuse d'un carter de chaîne fermé (12).

2. Véhicule à deux roues selon la revendication 1 caractérisé en ce que, lors de la mise en place du plateau de base (14), l'intervalle entre le corps (7a) de l'unité constitutive et la face de montage (5) est couvert par un soufflet (18).

# FIG.1

# FIG. 2

1

FIG. 3

0 102 942

FIG.4

FIG.5

3

# FIG.6